# EUROPÄISCHE PATENTSCHRIFT

(11) **EP 1 901 979 B1**
(45) Veröffentlichungstag und Bekanntmachung des Hinweises auf die Patenterteilung: **26.05.2010**
(21) Anmeldenummer: 06724446.7
(22) Anmeldetag: 20.04.2006
(51) Int. Cl.: B65G 13/08

(54) **ROLLEN-FÖRDEREINRICHTUNG MIT RICHTUNGSWECHSEL**
DIRECTIONAL-CHANGE ROLLER CONVEYOR INSTALLATION
TRANSPORTEUR A ROULEAUX AVEC CHANGEMENT DE DIRECTION

(30) Priorität: 23.04.2005 DE 102005019068
(43) Veröffentlichungstag der Anmeldung: 26.03.2008
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2006/003606
(87) Internationale Veröffentlichungsnummer: WO 2006/114233

(56) Entgegenhaltungen:
- DE-A1- 1 756 519
- DE-B- 1 271 577
- US-A- 4 096 942
- US-A1- 2002 134 649
- US-A1- 2003 192 774
- PATENT ABSTRACTS OF JAPAN Bd. 014, Nr. 549 (M-1055), 6. Dezember 1990 (1990-12-06) -& JP 02 233408 A (SONY CORP), 17. September 1990 (1990-09-17)

## Beschreibung

Die Erfindung betrifft eine Rollen-Fördereinrichtung mit Kurven-Rollenförderer zum Fördern von Stückgut, gegebenenfalls von einer ersten Förderstrecke zu einer anders gerichteten zweiten Förderstrecke, wobei erste und zweite Förderstrecke Rollenförderer mit quer zur Förderbahn verlaufenden angetriebenen Rollen sind und der Kurven-Rollenförderer quer zur Förderbahn radial sich erstreckende voneinander beabstandete Einzelrollen aufweist, die über einen gemeinsamen umlaufenden Treibgurt angetrieben sind.

Bei bekannten Rollen-Fördereinrichtungen mit Richtungswechsel erfolgt das Umsetzen zwischen Längs- und Quer-Rollenförderern durch Drehtische, die bei Stillstand des Drehtisches das Stückgut oder den Stückgut-Träger, wie Behälter oder Palette, aufnehmen und langsam um die Mitte des Stückguts oder längs eines Bogens in die Abgaberichtung der zweiten Förderstrecke schwenken, um dort das Stückgut abzugeben.

Eine Rollen-Fördereinrichtung gemäß dem Oberbegriff des Anspruchs 1 ist z.B. aus der DE 1271577 oder der DE 1756519 bekannt.

Der Erfindung liegt die Aufgabe zugrunde, eine Rollen-Fördereinrichtung mit Kurven-Rollenförderer der eingangs genannten Art bereitzustellen, deren Umlenkabschnitt sehr einfach aufgebaut ist und gleichwohl zuverlässig betrieben werden kann.

Gelöst wird die der Erfindung zugrundeliegende Aufgabe durch eine Rollen-Fördereinrichtung der im Anspruch 1 angegebenen Art. Vorteilhafte Weiterbildungen ergeben sich aus den Ansprüchen 2 bis 15.

Wesen der erfindungsgemäßen Rollen-Fördareinrichtung ist die Ausbildung eines Kurven-Rollenförderers mit einem Keilriemen als umlaufenden Treibriemen und einer-besonderen Riemenführung:

Insbesondere ist der Keilriemen in koaxialen Antriebsrollen oder koaxialen Antriebsmantelabschnitten der Einzelrollen sowohl oben beim Keilriemen-Obertrum als auch unten beim Keilriemen-Untertrum in der gleichen Keilriemen-Führung geführt, wobei der Keilriemen in der Keilriemen-Führung von oben beim Keilriemen-Obertrum und von unten beim Keilriemen-Untertrum über lose obere bzw. untere Anpressrollen gegen-gehalten ist. Der Obertrum des Keilriemens ist hierbei in den koaxialen Antriebsrollen oder Antriebsmantelabschnitten der Einzelrollen von oben eingehängt. Sind koaxiale separate Antriebsrollen vorgesehen, sind Antriebsrolle und zugehörige Einzelrolle fest miteinander verbunden. Die Anpressrollen liegen in zwei Ebenen zwischen den Einzelrollen und sind an einem vorzugsweise radial äußeren Kurvenrahmenteil des Kurven-Rollenförderers drehbar befestigt.

Ein derartig zwangsgeführter Keilriemen ist insbesondere längs der Kurvenbahn ein zuverlässiges und gleichwohl flexibles Einzelrollen-Antriebsmittel und erlaubt eine hinlängliche Querbiegung längs der Kurvenbahn. Der Keilriemen ist längs der Kurvenbahn in der Keilriemen-Führung vornehmlich an der radial inneren konischen Flanke der Keilriemen-Führung flächig abgestützt, wodurch ein hinlänglicher Reibschluß in der Keilriemen-Führung entsteht. Auf die radial äußere konische Flanke der Keilriemen-Führung kann vielfach verzichtet werden.

Die Keilriemen-Führung kann also bevorzugt aus einer radial inneren Flanke und einer bodenseitigen Nase bestehen.

Für eine Einstellung der Riemenspannung sind die Anpressrollen in vertikaler Richtung verstellbar.

Für ein vertikales Verstellen der Anpressrollen wird vorzugsweise zumindest eine Einzelrolle entfernt. Dann ist der Keilriemen lose und erlaubt ein einfaches Verstellen der Anpressrollen. Nach einem Verstellen wird die entfernte Einzelrolle in das System wieder eingesetzt und hierbei der Keilriemen gespannt.

Die Einzelrollen können leicht demontiert und wieder ein-gesetzt werden, da die Achsen der Einzelrollen des Kurven-Rollenförderers längsendseitig Steckschuhe besitzen, welche von oben in formschlüssige Aussparungen oder Stecktaschen in oder an Längsseitenrahmenteilen der Fördereinrichtung lösbar eingesteckt werden.

Vorzugsweise steht der Keilriemen in einer Antriebsverbindung mit zumindest einem der beiden Rollenförderer, wobei vorzugsweise die Antriebsverbindung zumindest einen Riemenübertrieb zwischen zwei benachbarten Endrollen des Kurven-Rollenförderers und des benachbarten Rollenförderers aufweist.

Während vorzugsweise der Obertrum des Keilriemens die Einzelrollen des Kurven-Rollenförderers radial außen antreibt, liegt die vorgenannte Antriebsverbindung radial innen.

Die Einzelrollen können zylindrische oder konische Einzelrollen sein.

Bei der Erfindung zeigt sich der Vorteil der geringen Bauhöhe und des sehr einfachen Aufbaus, wodurch ein hoher Servicegrad erreicht wird. Grund ist unter anderem der Antrieb mittels eines Keilriemensystems. Der Keilriemen wird über einen Motor angetrieben. Die Position des Keilriemens ist am Außenradius realisiert. Die Kraftübertragung auf die Einzelrollen erfolgt mittels kleiner Anpressrollen, welche zwischen den Zylinder- oder Konusrollen auf der Ober- und Unterseite angebracht sind.

Weitere vorteilhaften Merkmale der Erfindung ergeben sich aus den Unteransprüchen sowie aus der nachfolgenden Beschreibung, in der bevorzugte Ausführungsbeispiele der Erfindung anhand der Zeichnungen näher erläutert sind; es zeigen:
- Figur: 1 eine Rollen-Fördereinrichtung im Bereich eines Kurven-Rollenförderers in einer ersten Ausfüh- rungsvariante in einer schematischen perspektivi- schen Ansicht,
- Figur 2: die Rollen-Fördereinrichtung nach Figur 1 in einer Draufsicht,
- Figur 3: einen Vertikalschnitt längs der Linie A-A der Fi- gur 2,
- Figur 4: eine Rollen-Fördereinrichtung im Bereich eines Kurven-Rollenförderers in einer zweiten Ausfüh- rungsvariante in.einer.perspektivischen Ansicht ähnlich Figur 1, und
- Figur 5: eine Einzelheit in vergrößerter perspektivischer Darstellung.

Gemäß Zeichnungen ist eine Rollen-Fördereinrichtung 1 mit Richtungswechsel zum Fördern von Stückgut von einer ersten Förderstrecke über ein Umlenkelement zu einer senkrecht zur ersten Förderstrecke gerichteten zweiten Förderstrecke in Form von Rollenförderern 3, 4 vorgesehen, welche mit quer zur Förderbahn verlaufenden angetriebenen Rollen 9 ausgestattet sind.

Das Umlenkelement ist ein Kurven-Rollenförderer 2, welcher quer zur Förderbahn radial sich erstreckende voneinander beabstandete Einzelrollen 5 besitzt, die über einen gemeinsamen umlaufenden Treibgurt in Form eines Keilriemens 6 angetrieben sind.

Der Keilriemen 6 steht in einer Antriebsverbindung mit den beiden Rollenförderern 3, 4, wobei ein einziger Antrieb 7 sowohl für den ersten als auch für den zweite Rollenförderer 3, 4 sowie für den zwischengeordneten Kurven-Rollenförderer 2 vorgesehen ist.

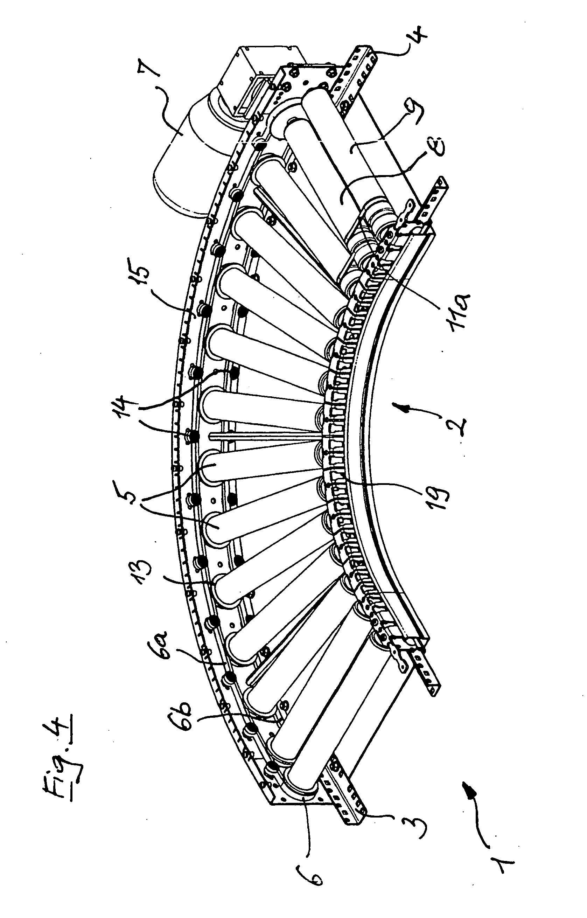

Die Antriebsverbindung weist gemäß Figur 4 zumindest einen Riemenübertrieb 11a zwischen zwei benachbarten Endrollen 8, 9 des Kurven-Rollenförderers 2 und des benachbarten Rollenförderers 3 bzw. 4 auf.

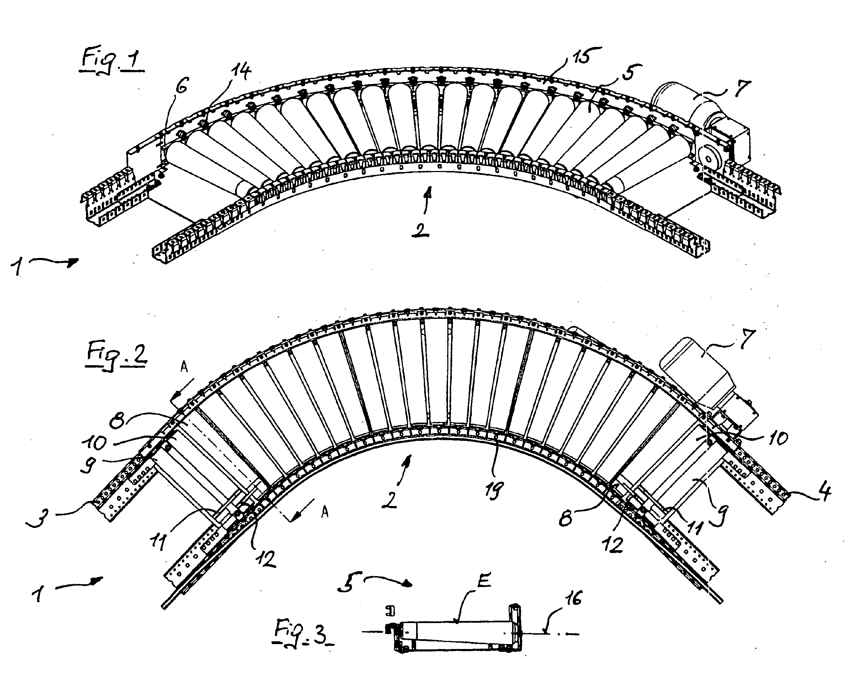

Im besonderen ist zwecks Raumüberbrückung zwischen den beiden benachbarten Endrollen 8, 9 des Kurven-Rollenförderers 2 und des Rollenförderers eine Zwischenrolle 10 nach Art der Rollenförderer gemäß Figur 2 vorgesehen, welche über einen ersten Riemenübertrieb 11 mit der Endrolle 9 des Rollenförderers 3 bzw. 4 und über einen zweiten Riemenübertrieb 12 mit der Endrolle 8 des Kurven- Rollenförderers 2 verbunden ist.

Sowohl Obertrum 6a als Untertrum 6b des Keilriemens 6 treiben radial außen die Einzelrollen 5 des Kurven-Rollenförderers 2 an.

Obertrum 6a und Untertrum 6b des Keilriemens sind in koaxialen Antriebsrollen 13 der Einzelrollen 5 geführt, wobei eine jede Antriebsrolle 13 mit der zugehörigen koaxialen Einzelrolle 5 achsfest verbunden ist.

Obertrum 6a und Untertrum 6b des Keilriemens sind an den Antriebsrollen 13 oder Antriebsmantelabschnitten der Einzelrollen 5 von oben und unten über lose Anpressrollen 14 geführt und gehalten, welche am äußeren Kurvenrahmenteil 15 des Kurven-Rollenförderers 2 oben und unten drehbar befestigt sind.

Die Anpressrollen 14 liegen jeweils zwischen zwei benachbarten Einzelrollen 5 und sind bezüglich des Keilriemens 6 vertikal verstellbar und mithin einstellbar.

Während der Keilriemen 6 radial außen verläuft, liegt die Antriebsverbindung zwischen zwei benachbarten Endrollen 8, -9 des Kurven-Rollenförderers 2 und des benachbarten Rollenförderers 3 bzw. 4 radial innen.

Wie der Keilriemen 6, so sind auch die Riemenübertriebe 11, 11a, 12 in besonders vorteilhafter Variante als Keilriemen ausgebildet, welche ebenfalls in entsprechend profilierten Antriebsrollen 13 oder Antriebsmantelabschnitten der Einzelrollen 5 antreibend eingreifen.

Während der Kurven-Rollenförderer 2 gemäß der Ausführungsvariante nach Figur 4 zylindrische Einzelrollen nach Art der benachbarten Rollenförderer besitzt, kennzeichnet sich der Kurven-Rollenförderer 2 gemäß der Ausführungsvariante nach den Figuren 1 bis 3 durch konische Einzelrollen, deren größerer Durchmesser radial außen liegt.

Die Förderbahn des Kurven-Rollenförderers 2 mit den konischen Einzelrollen liegt in einer Ebene E gemäß Figur 3 dergestalt, daß die Achsen 16 der konischen Einzelrollen radial nach außen schräg nach unten verlaufen.

Die Antriebsrollen der konischen Einzelrollen weisen einen Durchmesser entsprechend dem Durchmesser der Rollen der Rollenförderer auf.

Keilriemen 6 und Riemenübertriebe können gegebenenfalls mit gleicher Umlaufgeschwindigkeit betrieben werden.

Zylindrischen Einzelrollen sind vorzugsweise mit gleicher Umlaufgeschwindigkeit wie die Rollen der Rollenförderer betrieben.

Die Umlaufgeschwindigkeit der konischen Einzelrollen in der Förderbahnmitte kann mit Vorzug gleich der Umlaufgeschwindigkeit der Rollen der Rollenförderer sein.

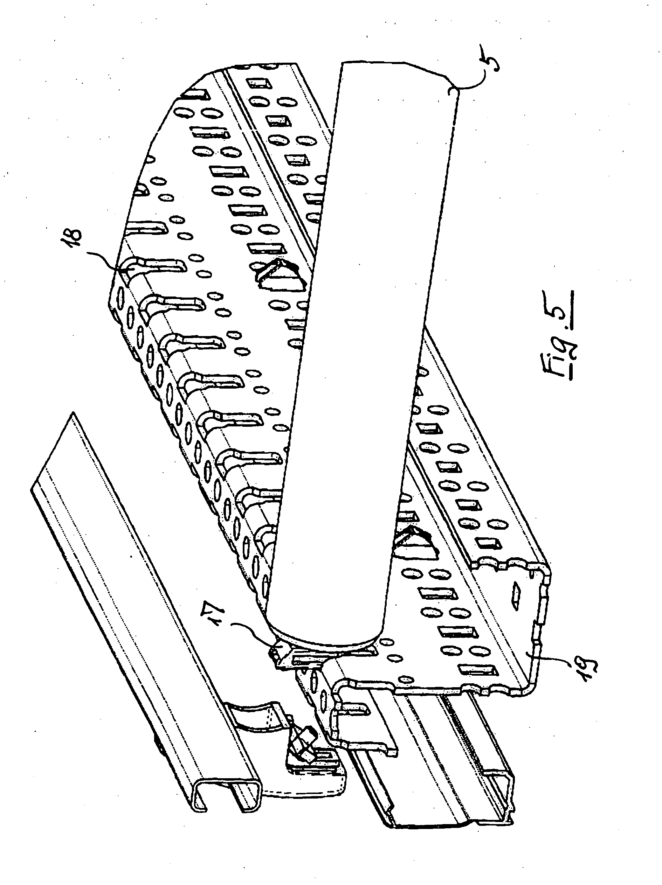

Erfindungsgemäß besitzen die Achsen der Einzelrollen des Kurven-Rollenförderers und vorzugsweise die Achsen der Rollen der Rollenförderer längsendseitig Steckschuhe 17 gemäß Figur 5 , welche von oben in formschlüssige Aussparungen 18 oder Stecktaschen in oder an Längsseitenrahmenteilen 19 der Fördereinrichtung lösbar einsteckbar sind. Dadurch können für eine Wartung oder Einstellung der oberen und unteren Anpressrollen 14 und des Keilriemens 6 einschließlich der Riemenübertriebe einzelne Einzelrollen 5 der Fördereinrichtung durch Lösen der Steckverbindung der Einzelrollen entfernt und nach einer Wartung oder Einstellung wieder eingesetzt werden.

## Patentansprüche

1. Rollen-Fördereinrichtung (1) mit Kurven-Rollenförderer (2) zum Fördern von Stückgut, gegebenenfalls von einer ersten Förderstrecke zu einer anders gerichteten zweiten Förderstrecke, wobei erste und zweite Förderstrecke Rollenförderer (3, 4) mit quer zur Förderbahn verlaufenden angetriebenen Rollen (9) sind und der Kurven-Rollenförderer (2) quer zur Förderbahn radial sich erstreckende voneinander beabstandete Einzelrollen (5) aufweist, die über einen gemeinsamen umlaufenden Treibgurt angetrieben sind, welcher in koaxialen Antriebsrollen (13) oder koaxialen Antriebsmantelabschnitten der Einzelrollen (5) sowohl oben beim Treibgurt-Obertrum (6a) als auch unten beim Treibgurt-Untertrum (6b) in der gleichen Treibgurt-Führung geführt ist, wobei der Treibgurt (6) in der Treibgurt-Führung von oben beim Treibgurt-Obertrum (6a) und von unten beim Treibgurt-Untertrum (6b) über lose obere bzw. untere Anpressrollen (14) gegen-gehalten ist, und die Anpreserollen (14) zwischen den Einzelrollen (5) liegen, wobei die Anpressrollen (14) an einem vorzugsweise radial äußeren Kurvenrahmenteil (15) des horizontalen Kurven-Rollenförderers (2) drehbar befestigt sind,
**dadurch gekennzeichnet,**
**dass** der umlaufende Treibgurt ein Keilriemen (6) ist, und dass die Achsen der Einzelrollen (5) längsendseitig Steckschuhe (17) besitzen, welche von oben in formschlüssige Aussparungen (18) oder Stecktaschen in oder an Längsseitenrahmenteilen (19) des Kurven-Rollenförderers lösbar einsteckbar sind, welche dem Kurvenrahmenteil (15) gegenüberliegen, wobei für eine Wartung oder Einstellung der Anpressrollen und/oder des Keilriemens zumindest eine Einzelrolle durch Lösen der Steckverbindung entfernt und nach einer Wartung oder Einstellung wieder eingesetzt wird, und dass die Anpressrollen (14) vorzugsweise bei Entfernung zumindest einer Einzelrolle (5) vertikal verstellbar sind.

2. Rollen-Fördereinrichtung nach Anspruch 1,
**dadurch gekennzeichnet**,
**dadurch gekennzeichnet,**
**dass** der Keilriemen in entsprechend profilierten Antriebsrollen (13) oder Antriebsmantelabschnitten der Einzelrollen (5) oben und unten antreibend eingreift.

3. Rollen-Fördereinrichtung nach Anspruch 1 oder 2,
**dadurch gekennzeichnet,**
**dass** der Keilriemen in einer Antriebsverbindung mit zumindest einem der beiden Rollenförderer (3 bzw. 4) steht.

4. Rollen-Fördereinrichtung nach Anspruch 3,
**dadurch gekennzeichnet,**
**dass** ein einziger Antrieb (7) sowohl für den ersten als auch für den zweiten Rollenförderer (3, 4) sowie für den zwischengeordneten Kurven-Rollenförderer (2) vorgesehen ist.

5. Rollen-Fördereinrichtung nach Anspruch 3 oder 4,
**dadurch gekennzeichnet,**
**dass** die Antriebsverbindung zumindest einen Riemenübertrieb (11a) zwischen zwei benachbarten Endrollen (8, 9) des Kurven-Rollenförderers (2) und des benachbarten Rollenförderers (3 bzw. 4) aufweist.

6. Rollen-Fördereinrichtung nach Anspruch 3 oder 4,
**dadurch gekennzeichnet,**
**dass** zwischen den beiden benachbarten Endrollen (8, 9) des Kurven-Rollenförderers (2) und des Rollenförderers eine Zwischenrolle (10) nach Art der Rollenförderer vorgesehen ist, welche über einen ersten Riemenübertrieb (11) mit der Endrolle (9) des Rollenförderers (3 bzw. 4) und über einen zweiten Riemenübertrieb (12) mit der Endrolle (8) des Kurven-Rollenförderers (2) verbunden ist.

7. Rollen-Fördereinrichtung nach einem der Ansprüche 1 bis 6,
**dadurch gekennzeichnet,**
**dass** der Keilriemen die Einzelrollen (5) des Kurven-Rollenförderers (2) radial außen antreibt.

8. Rollen-Fördereinrichtung nach Anspruch 7,
**dadurch gekennzeichnet,**
**dass** die Antriebsverbindung zwischen zwei benachbarten Endrollen (8, 9) des Kurven-Rollenförderers (2) und des benachbarten Rollenförderers (3 bzw. 4) radial innen liegt.

9. Rollen-Fördereinrichtung nach einem der Ansprüche 1 bis 8,
**dadurch gekennzeichnet,**
**dass** der Kurven-Rollenförderer (2) zylindrische Einzelrollen nach Art der benachbarten Rollenförderer besitzt.

10. Rollen-Fördereinrichtung nach einem der Ansprüche 1 bis 8,
**dadurch gekennzeichnet,**
**dass** der Kurven-Rollenförderer (2) konische Einzelrollen besitzt, deren größerer Durchmesser radial außen liegt.

11. Rollen-Fördereinrichtung nach Anspruch 10,
**dadurch gekennzeichnet,**
**dass** die Förderbahn des Kurven-Rollenförderers (2) in einer Ebene (E) liegt, wobei die Achsen (16) der konischen Einzelrollen radial nach außen schräg nach unten verlaufen.

12. Rollen-Fördereinrichtung nach Anspruch 10 oder 11,
**dadurch gekennzeichnet,**
**dass** die Antriebsrollen der konischen Einzelrollen einen Durchmesser entsprechend dem Durchmesser der Rollen der Rollenförderer aufweisen.

13. Rollen-Fördereinrichtung nach einem der Ansprüche 5 bis 12,
**dadurch gekennzeichnet,**
**dass** der Keilriemen und die Riemenübertriebe mit gleicher Umlaufgeschwindigkeit betrieben sind.

14. Rollen-Fördereinrichtung nach Anspruch 9,
**dadurch gekennzeichnet,**
**dass** die zylindrischen Einzelrollen mit gleicher Umlaufgeschwindigkeit wie die Rollen der Rollenförderer betrieben sind.

15. Rollen-Fördereinrichtung nach einem der Ansprüche 10 bis 13,
**dadurch gekennzeichnet,**
**dass** die Umlaufgeschwindigkeit der konischen Einzelrollen in der Förderbahnmitte gleich der Umlaufgeschwindigkeit der Rollen der Rollenförderer ist.

## Claims

1. Said roller conveying means (1) with said curved roller conveyor (2) for conveying individually packaged products, optionally from a first conveying section to a differently directed, second conveying section, wherein the said first and second conveying sections are said roller conveyors (3, 4) with said driven rollers (9) extending at right angles to the conveyor track and the said curved roller conveyor (2) has said individual rollers (5), which are located at spaced locations from one another, extend radially at right angles to the conveyor track and are driven via a common circulating drive belt, which is guided in the same belt guide in said coaxial drive rollers (13) or coaxial drive jacket sections of the said individual rollers (5) both at the top at the said carrying run (6a) of the belt and at the bottom at the said empty belt (6b), wherein the said belt (6) is held up in the belt guide from the top at the said belt carrying run (6a) and from the bottom at the said empty belt (6b) via said loose upper and lower pressing rollers (14), and the said pressing rollers (14) are located between the said individual rollers (5) and are rotatably fastened to a said, preferably radially outer curved frame part (15) of the said curved roller conveyor (2),
**characterized in that**
the said circulating drive belt is designed as a said V-belt (6), and the axes of the said individual rollers (5) have, at the longitudinal ends, said plug-in shoes (17), which can be detachably inserted from the top into said positive-locking recesses (18) or plug-in pockets in or at said longitudinal side frame parts (19) of the said curved roller conveyor, which are located opposite the said curved frame part (15), wherein at least one said individual roller is removed by severing the plug-type connection for maintaining or setting the pressing rollers and/or the V-belt and is re-inserted after maintenance or setting, and the said pressing rollers (14) are preferably adjustable vertically on removal of at least one of the said individual rollers (5).

2. Roller conveying means in accordance with claim 1,
**characterized in that**
the said V-belt drivingly meshes with said correspondingly profiled drive rollers (13) or drive jacket sections of the said individual rollers (5) at the top and at the bottom.

3. Roller conveying means in accordance claim 1 or 2,
**characterized in that**
the said V-belt is in drive connection with at least one of the said two roller conveyors (3 and 4).

4. Roller conveying means in accordance with claim 3,
**characterized in that**
a said single drive (7) is provided for both the said first and the said second roller conveyors (3, 4) as well as for the said curved roller conveyor (2) arranged between them.

5. Roller conveying means in accordance with claim 3 or 4,
**characterized in that**
the drive connection has at least one said belt changeover (11a) between two said adjacent end rollers (8, 9) of the said curved roller conveyor (2) and the said adjacent roller conveyor (3 and 4, respectively).

6. Roller conveying means in accordance with claim 3 or 4,
**characterized in that**
a said intermediate roller (10) of the type of the roller conveyors, which is connected to the said end roller (9) of the said roller conveyor (3 and 4, respectively) via a said first belt changeover (11) and to the said end roller (8) of the said curved roller conveyor (2) via a said second belt changeover (12), is
provided between the said two adjacent end rollers (8, 9) of the said curved roller conveyor (2) and of the said roller conveyor.

7. Roller conveying means in accordance with one of the claims 1 through 6,
**characterized in that**
the V-belt drives the said individual rollers (5) of the said curved roller conveyor (2) radially on the outside.

8. Roller conveying means in accordance with claim 7,
**characterized in that**
the drive connection between two said adjacent end rollers (8, 9) of the said curved roller conveyor (2) and of the said adjacent roller conveyor (3 and 4, respectively) is located radially on the inside.

9. Roller conveying means in accordance with one of the claims 1 through 8,
**characterized in that**
the said curved roller conveyor (2) has said cylindrical individual rollers of the type of the said adjacent roller conveyors.

10. Roller conveying means in accordance with one of the claims 1 through 8,
**characterized in that**
the said curved roller conveyor (2) has conical individual rollers, whose larger diameter is radially on the outside.

11. Roller conveying means in accordance with claim 10,
**characterized in that**
the conveyor track of the said curved roller conveyor (2) is located in a said plane (E), wherein the said axes (16) of the said conical individual rollers extend radially outwardly and obliquely downwardly.

12. Roller conveying means in accordance with claim 10 or 11,
**characterized in that**
the drive rollers of the conical individual rollers have a diameter corresponding to the diameter of the rollers of the roller conveyors.

13. Roller conveying means in accordance with one of the claims 5 through 12,
**characterized in that**
the V-belt and the belt changeovers are operated at the same circumferential velocity.

14. Roller conveying means in accordance with claim 9,
**characterized in that**
the cylindrical individual rollers are operated at the same circumferential velocity as the rollers of the roller conveyors.

15. Roller conveying means in accordance with one of the claims 10 through 13,
**characterized in that**
the circumferential velocity of the conical individual rollers in the middle of the conveyor track is equal to the circumferential velocity of the rollers of the roller conveyors.

## Revendications

1. Dispositif de transport à rouleaux (1) avec un transporteur à rouleaux incurvé (2) pour transporter des marchandises de détail, le cas échéant d'un premier tronçon de transport à un autre deuxième tronçon de transport orienté différemment, le premier et le deuxième tronçon de transport étant des transporteurs à rouleaux (3, 4) avec des rouleaux entraînés (9) s'étendant perpendiculairement au tapis de transport et le transporteur à rouleaux incurvé (2) comportant des rouleaux individuels (5) s'étendant perpendiculairement au tapis de transport dans le plan radial et séparés les uns des autres, lesdits rouleaux étant entraînés via une courroie d'entraînement tournante commune qui est entraînée dans des rouleaux d'entraînement coaxiaux (13) ou dans les segments de gaine d'entraînement coaxiaux des rouleaux individuels (5) tant en haut par le brin supérieur de la courroie d'entraînement (6a) qu'en bas par le brin inférieur de la courroie d'entraînement (6b) dans le même guide de courroie d'entraînement, la courroie d'entraînement (6) étant maintenue dans le guide de courroie d'entraînement par en haut au niveau du brin supérieur de la courroie d'entraînement (6a) et par en bas au niveau du brin inférieur de la courroie d'entraînement (6b) via des rouleaux compresseurs supérieurs et/ou inférieurs (14) lâches et les rouleaux compresseurs (14) reposant entre les rouleaux individuels (5), les rouleaux compresseurs (14) étant fixés de façon tournante au niveau d'une partie de cadre incurvée (15) extérieure de préférence radiale du transporteur à rouleaux incurvé (2) horizontal, **caractérisé en ce que**
la courroie d'entraînement tournante est une courroie trapézoïdale (6), que les axes des rouleaux individuels (5) possèdent le long du côté d'extrémité des griffes (17) pouvant être insérées de façon amovible par en haut dans les évidements (18) ou les poches par complémentarité de formes dans ou au niveau des parties de cadre de côté longitudinal (19) du transporteur à rouleaux incurvé, lesdites pièces étant opposées à la partie de cadre incurvée (15), un entretien ou un réglage des rouleaux compresseurs et/ou de la courroie trapézoïdale se produisant en desserrant au moins un rouleau individuel de la liaison d'imbrication et ledit rouleau étant remis en place après un entretien ou un réglage et **en ce que** les rouleaux compresseurs (14) peuvent être réglés dans le plan vertical de préférence en retirant au moins un rouleau individuel (5).

2. Dispositif de transport à rouleaux selon la revendication 1,
**caractérisé en ce que**
la courroie trapézoïdale s'imbrique par en haut et par en bas dans les rouleaux d'entraînement (13) profilés de façon correspondante ou les segments de gaine d'entraînement des rouleaux individuels (5).

3. Dispositif de transport à rouleaux selon la revendication 1 ou 2,
**caractérisé en ce que**
la courroie trapézoïdale est en liaison d'entraînement avec au moins un des deux transporteurs à rouleaux (3 et/ou 4).

4. Dispositif de transport à rouleaux selon la revendication 3,
**caractérisé en ce**
**qu'**un seul entraînement (7) est prévu tant pour le premier que pour le deuxième transporteur à rouleaux (3, 4) ainsi que pour le transporteur à rouleaux incurvé (2) intercalé.

5. Dispositif de transport à rouleaux selon la revendication 3 ou 4,
**caractérisé en ce que**
la liaison d'entraînement comporte au moins une transmission à crémaillère (11 a) entre deux rouleaux d'extrémité (8, 9) connexes du transporteur à rouleaux incurvé (2) et des transporteurs à rouleaux (3 et/ou 4) connexes.

6. Dispositif de transport à rouleaux selon la revendication 3 ou 4,
**caractérisé en ce**
**qu'**un rouleau intermédiaire (10) du type du transporteur à rouleaux est prévu entre les deux rouleaux d'extrémité (8, 9) connexes du transporteur à rouleaux incurvé (2) et du transporteur à rouleaux, ledit rouleau intermédiaire étant relié au rouleau d'extrémité (9) du transporteur à rouleaux (3 et/ou 4) via une première transmission à crémaillère (11) et au rouleau d'extrémité (8) du transporteur à rouleaux incurvé (2) via une deuxième transmission à crémaillère (12).

7. Dispositif de transport à rouleaux selon l'une quelconque des revendications 1 à 6,
**caractérisé en ce que**
la courroie trapézoïdale entraîne les rouleaux individuels (5) du transporteur à rouleaux incurvé (2) radialement vers l'extérieur.

8. Dispositif de transport à rouleaux selon la revendication 7,
**caractérisé en ce que**
la liaison d'entraînement repose radialement vers l'intérieur entre les deux rouleaux d'extrémité (8, 9) connexes du transporteur à rouleaux incurvé (2) et des transporteurs à rouleaux (3 et/ou 4) connexes.

9. Dispositif de transport à rouleaux selon l'une quelconque des revendications 1 à 8,
**caractérisé en ce que**
le transporteur à rouleaux incurvé (2) cylindrique possède des rouleaux individuels du type des transporteurs à rouleaux connexes.

10. Dispositif de transport à rouleaux selon l'une quelconque des revendications 1 à 8,
**caractérisé en ce que**
le transporteur à rouleaux incurvé (2) conique possède des rouleaux individuels dont le diamètre supérieur se trouve radialement vers l'extérieur.

11. Dispositif de transport à rouleaux selon la revendication 10,
**caractérisé en ce que**
le tapis de transport du transporteur à rouleaux incurvé (2) repose dans un plan (E), les axes (16) des rouleaux individuels coniques s'étendant radialement vers l'extérieur de façon inclinée vers le bas.

12. Dispositif de transport à rouleaux selon la revendication 10 ou 11,
**caractérisé en ce que**
les rouleaux d'entraînement des rouleaux individuels coniques présentent un diamètre correspondant au diamètre des rouleaux des transporteurs à rouleaux.

13. Dispositif de transport à rouleaux selon l'une quelconque des revendications 5 à 12,
**caractérisé en ce que**
la courroie trapézoïdale et les transmissions à crémaillère sont entraînées à la même vitesse de rotation.

14. Dispositif de transport à rouleaux selon la revendication 9,
**caractérisé en ce que**
les rouleaux individuels cylindriques sont entraînés à la même vitesse de rotation que les rouleaux des transporteurs à rouleaux.

15. Dispositif de transport à rouleaux selon l'une quelconque des revendications 10 à 13, **caractérisé en ce que**
la vitesse de rotation des rouleaux individuels coniques est la même au centre du tapis de transport que la vitesse de rotation des rouleaux des transporteurs à rouleaux.
